# EUROPEAN PATENT APPLICATION

(11) **EP 4 624 552 A1**
(43) Date of publication of application: **01.10.2025**
(21) Application number: 24472005.8
(22) Date of filing: 25.03.2024
(51) Int. Cl.: C10J 3/48, C10J 3/62, C10J 3/66, C10K 1/00, C10K 1/02, C10K 1/04, C10K 1/08, C10J 3/54

(54) **METHOD AND INSTALLATION FOR THREE-STAGE GASIFICATION FROM CARBON CONTAINED FEEDSTOCK**

(71) Applicant: Cogasol Energy SARL, 2562 Luxembourg (LU)
(72) Inventor: Zlatkov, Svetlozar Boychev, Lyaskovets (BG); Velichkov, Borislav Angelov, Sofia (BG); Penchev, Petko Ivanov, Sofia (BG); Pentchev, Ivan Pentchev, Sofia (BG); Benkebil, Karim, 1226 Thônex (CH); Purtak, Dariusz, 04-141 Warsaw (PL)

(57) **Abstract**

The present invention relates to a method of generating a producer gas (Synthesis gas - syngas) from carbon contained feedstock. The method is a three-stage gasification, including pre-gasification - pyrolysis; gasification of pyrolysis vapor-gas mixture; gasification of solid fuels. As feedstock can be used any carbon contained feedstock like Refuse Derived Fuel (RDF), medical waste, agricultural waste, tires, automobile shredder residue (ASR or car-fluff), residues and waste materials, biomass such as straw, wood or grass, but also from the biogenic solid or liquid waste resulting from the food industry, sewage sludge from waste water treatment, spent high-salt solutions from wood pulping, known as black liquor, and products from animal carcass processing, such as animal meal.

**Method for three-stage gasification from carbon contained feedstock,** including gasification processes preceded by reduction of water content, pre-gasification - pyrolysis of the pre-dried and optionally ground feedstock, at a pressure that is lower or higher than atmospheric; after the gasification process, the gas is cooled; the process of pre-gasification - pyrolysis takes place at temperatures between 240 and 900 °C, at a pressure that is lower or higher than atmospheric; gasification processes take place at temperatures between 800 and 2200 °C, at pressures that are lower or higher than atmospheric; the required amount of oxygen for the gasification process is introduced by adding air or mixture pure oxygen and water vapor and/or other inert component in gas form, like CO2 etc.; the gasification fluid from the gasification stage can be used alone or in combination with other gases, as a heater - heating agent in the preceding pre-gasification stage - pyrolysis; the waste heat from the gasification processes can be used to generate low or highpressure and/or preheated steam and/or for preheating the air needed for gasification, and/or for heat recuperation for pyrolysis agent, in several steps of agent preheating; the products from pre-gasification - pyrolysis: a vapor-gas mixture and a solid phase - charcoal or coke can be used alone or in combination as a fuel in the gasification stage; granulation of pyrolysis solid product - coke or charcoal, alone or whit some additives like heavy tars from gasification and/or with small fraction of feeding materials, with low temperature melting point like small plastic particles etc.; direct continuous or periodic gasification of pyrolysis vapors with air or air/steam or oxygen/steam or oxygen/CO2 in **the burner on gasifier;** direct continuous or periodic gasification of carbon granules with air or air/steam or oxygen/steam or oxygen/Co2 in the **stationary bed** in gasifier; all gases from pyrolysis vapor gasification or pyrolysis vapors itself pass through heated to high temperatures carbon granules, located on stationary bed of gasifier

## Description

### I. FIELD OF THE INVENTION

The present invention relates to a method of generating a producer gas (Synthesis gas - syngas) from carbon contained feedstock. The method is a three-stage gasification, including pre-gasification - pyrolysis; gasification of pyrolysis vapor-gas mixture; gasification of solid fuels. As feedstock can be used any carbon contained feedstock like Refuse Derived Fuel (RDF), medical waste, agricultural waste, tires, automobile shredder residue (ASR or car-fluff), residues and waste materials, biomass such as straw, wood or grass, but also from the biogenic solid or liquid waste resulting from the food industry, sewage sludge from waste water treatment, spent high-salt solutions from wood pulping, known as black liquor, and products from animal carcass processing, such as animal meal.

### II. DESCRIPTION OF THE PRIOR ART

Extensive descriptions of gasification and pyrolysis process can be found in P. Basu "Biomass Gasifcation and Pyrolysis. Practical Design and Theory", Elsevier, 2010 and C. Higmann, "Gasification", Elsevier, 2003*.*

Solid biogenic fuels (straw, wood, grasses ect.) are difficult to direct use in the gasificatin process. These fuels have a low compressed bale density and so low energy density. For exemple straw with 70 to 130 kg/m3 and a calorific value of 12 to 16 MJ/kg. Calorific values for grasses and beech wood and grasses are respectively ^{~}15 MJ/kg and 17 MJ/kg. These fibrous and elastic structure require a very high grinding effort to produce of fuel for gasification. In addition, the fuel dusts produced by the grinding also have a fibrous state that couses tranport desavantages and operation problems.

A gasification preceded by pyrolysis is a way to avoid problems related to the feedstock structure and composition. During the pyrolysis process carbon contained solid products (coke, charcoal etc.), oil (liquid products) and pyrolysis gases - non-condensing and condensing (vapors), are produced. The vapors, which consist of heavier molecules, condense on cooling and can be added to the pyrolysis liquid yield.

DE 10 2005 006 305 A1 proposes a method of a two-stage system combining pyrolysis and gasification. After pyrolysis, the pyrolysis gas is used for energy purposes, and the pyrolysis oil (condensate) and pyrolysis coke are mixed to form a slurry, which is fed as fuel to the gasification reactor. Gasification takes place in an entrained-flow gasifier at temperatures below 1200°C and increased pressure up to 120 bar. After the gasification process, the resulting gas is cooled by water injection to the water vapor saturation temperature, the amount of water is measured in such a way that the water vapor content of the cooled raw gas is up to 75% vol. Waste heat from gasification processes is used to generate high pressure steam. The method includes the following stages: a) Reduction of the water content of the feedstock; b) Fast pyrolysis of the pre-dried and optionally ground feedstock; c) Grinding of pyrolysis coke; d) Mixing the pyrolysis coke with the pyrolysis oil/condensate to form a liquid-solid slurry; e) Gasification of the liquid-solid slurry in an entrained-flow gasifier; f) Cooling and washing or filtering the gas resulting from gasification; g) Feed the raw gas containing water vapor to a raw gas converter to set a specific H2/CO ratio; h) High pressure steam recovery. Instead of process steps a) to d), a water-soluble bio-paste can be produced by hydrothermal pyrolysis of the wet biomass at pressures between 200 and 250 bar and temperatures below 300 °C and then the bio-paste is gasified in an entrained-flow gasifier instead of liquid-solid slurry.

US 9 874 142 B2 proposes a system comprising: a pyrolysis unit for production of pyrolysis gas and coke; a compression system coupled in flow communication between the pyrolysis unit and the slurry preparation unit, used to condense the pyrolysis gas into a liquid that is channeled to the slurry preparation unit to facilitate producing slurry feed from pyrolysis solid product; a slurry preparation unit that receive coke from the pyrolysis unit and produce slurry feed that is conveyed to the entrained-flow gasifier where it is used for fuel in the gasification process; an entrained-flow gasifier producing syngas using a slurry fuel feed; an cooler used to receive and cool said syngas steam; a conduit coupled between the cooler and the pyrolysis unit, by which the syngas stream is mixed with a portion of said pyrolysis gas; a by-product recovery system coupled to said pyrolysis. Temperatures inside pyrolysis unit may range from approximately 150° C to about 800° C. Heating may generate a carbon contained solid, a pyrolysis gas, comprising non-condensable hydrocarbons and condensable hydro carbons such as tars and oils. The solid is channeled to a slurry preparation unit wherein water, or another suitable liquid, maybe added to create slurry. A portion of pyrolysis gases are channeled to a compression system and condensable hydrocarbons are condensed into a liquid which may then be channeled into slurry preparation unit as liquid for use in creating slurry feedstock. The slurry feedstock is routed to entrained-flow gasifier to be use as a fuel in the gasification process. Furthermore, a portion of pyrolysis gases bypasses slurry preparation unit and is channeled into a gasifier, relate from slurry from slurry or may bypass gasifier and be channeled to downstream cleaners for use as a fuel gas in power generation. A portion of pyrolysis gas is mixed with a portion of syngas stream to create a hydrocarbon-rich syngas stream containing gasification by-products which are removed using by-products recovery system. An entrained-flow gasifier is used. The gasifier converts feedstock in the form of a slurry into synthetic gas. A suitable oxygen contained moderator is used for gasification. Gasification takes place at an elevated pressure (between 20 bar and 90 bar) and at an elevated temperature (between 700° C and 1600° C. The syngas stream is conveyed to a cooler for cooling and heat transfer. A portion of syngas stream is conveyed to a scrubber for removing certain particulate matter and other pollutants. Syngas stream may be further cooled, purified, and/or cleaned and directed into a power system for use in the generation of power, and /or for the production of chemicals. A portion of hot syngas stream is used to provide at least a portion of the heating requirements for the pyrolysis process that takes place in pyrolysis unit. A portion of syngas stream may be conveyed to the by-products recovery system.

### III. TECHNICAL DESCRIPTON

The present invention is based on the aim of developing a method that allows the unlimited use of carbon contained fedestock materials to obtain generator gas (synthetic gas - syngas).

This objective is achieved by a method of generating fuel and producer gas (syngas) from carbon contained feedstock through method for **three-stage gasification from carbon contained feedstock,** including gasification processes preceded by reduction of water content, pre-gasification - pyrolysis of the pre-dried and optionally ground feedstock, at a pressure that is lower or higher than atmospheric. After the gasification process, the generated producer gas (syngas) is cooled. The process of pre-gasification (pyrolysis) takes place at temperatures between 240 and 900 °C, at a pressure that is lower or higher than atmospheric. Gasification processes take place at temperatures between 800 and 2200 °C, at pressures that are lower or higher than atmospheric. The required amount of oxygen for the gasification process is introduced by adding air or mixture pure oxygen and water vapor and/or other inert component in gas form (like CO2 etc.). The gasification fluid from the gasification stage can be used alone or in combination with other gases, as a heater - heating agent in the preceding pre-gasification stage (pyrolysis). The waste heat from gasification processes can be used to generate low or high-pressure and/or preheated steam and/or for preheating the air needed for gasification, and/or for heat recuperation for pyrolysis agent, in several steps of agent preheating. The products from pre-gasification (pyrolysis) stage: a vapor-gas mixture and a carbon contained solid phase (coke or charcoal) can be used alone or in combination as a fuel in the gasification stage. After the pyrolysis process the pyrolysis solid product (coke orcharcoal) is granulated alone or with some additives like heavy tars from gasification and/or with small fraction of feeding materials, with low temperature melting point (like small plastic particles etc.); and direct continuous or periodic gasification of pyrolysis vapors whit air or air/steam or oxygen/steam or oxygen/CO2 in **the burner on gasifier** takes place; direct continuous or periodic gasification of carbon granules with air or air/steam or oxygen/steam or oxygen/CO2 in the **stationary bed** in gasifier takes place; all gases from pyrolysis vapor gasification or pyrolysis vapors itself pass through heated to high temperatures carbon granules, located on stationary bed of gasifier.

Unlike the methods known so far, the advantage of our method is that after the pyrolysis process the pyrolysis solid product (coke or charcoal) is granulated alone or with some additives like heavy tars from gasification and/or with small fraction of feeding materials, with low temperature melting point (like small plastic particles etc.).

Unlike the methods known so far, the advantage of our method is that direct continuous or periodic gasification of pyrolysis vapors with air or air/steam or oxygen/steam or oxygen/CO2 in **the burner on gasifier** takes place.

Unlike the methods known so far, the advantage of our method is that direct continuous or periodic gasification of carbon granules with air or air/steam or oxygen/steam or oxygen/CO2 in the **stationary bed** in gasifier takes place.

Unlike the methods known so far, the advantage of our method is that all gases from pyrolysis vapor gasification or pyrolysis vapors itself pass through heated to high temperatures carbon granules, located on stationary bed of gasifier.

After granulation the pyrolysis products: granulated pyrolysis solid product (coke or charcoal) and pyrolysis vapor-gas mixture are fed separately to the stationary bed gasifier.

In other variant of embodiment, after granulation the pyrolysis products: granulated pyrolysis solid product (coke or charcoal), is fed alone into the gasification and the vapor-gas mixture is used in other application.

In other variant of embodiment, the pyrolysis vapor-gas mixture is fed alone to gasification and solid product (coke or charcoal) is used in other application.

In other variant of embodiment, a part from the pyrolysis products: granulated solid product (coke or charcoal) and vapor-gas mixture is separated and used elsewhere and the remaining part is fed separately to the stationary bed gasifier.

The gasification fluid from the gasification stage can be used alone or in combination with other gases, as a heater - heating agent in the preceding pre-gasification stage - pyrolysis;

The waste heat from the gasification processes can be used to generate low or high-pressure and/or preheated steam and/or for preheating the air needed for gasificarion, and/or for heat recuperation for pyrolysis agent, in several steps of agent preheating.

The present invention relates to a method of generating a producer gas (Synthesis gas - syngas) from carbon contained feedstock. The method is a three-stage gasification, including pre-gasification - pyrolysis; gasification of vapor-gas mixture; gasification of solid fuels. As feedstock can be used any carbon contained feedstock like Refuse Derived Fuel (RDF), medical waste, agricultural waste, tires, automobile shredder residue (ASR or car-fluff), residues and waste materials, biomass such as straw, wood or grass, but also from the biogenic solid or liquid waste resulting from the food industry, sewage sludge from waste water treatment, spent high-salt solutions from wood pulping, known as black liquor, and products from animal carcass processing, such as animal meal.

The converted producer gas (syngas) can be used after further purification stages for the production of electricity, heat, fuels, hydrogen, methanol, ethanol, dimethyl ether (DME), Fischer-Tropsch Product (FT products); ethylene; propylene; acetic acid; ammonia; urea; synthetic natural gas (SNG); or other chemicals as well as all other possible uses of synthetic gas (syngas).

The method includes the following steps:

### 1. Reduction of the water content (Dehydration)

Carbon contained feedstock is fed by conveyor belt into a bunker, which, by gravity, will release the necessary quantity of feedstock to the dehydrator conveyor (drying conveyor). The humidity contained into the feedstock is condensed and collected in collector vessel. The water collected is the humidity at the surface of feedstock. If needed, this water will be cleaned by active oxygen prior to its release to the sewage. Any drying method such as direct drying with hot gases, indirect drying by contact with heated surfaces, or methods where the drying heat is provided by radiation, such as microwave drying, can be used to dry the feedstock. In addition, drying can be carried out at lower temperatures by freeze drying or reduced pressure drying, such as vacuum drying.

**2. Pyrolysis of the pre-dried and optionally comminuted feedstock (Pre gasification/Homogenization):** The screw conveyor delivers the feedstock into the first chamber reactor. Inside the First chamber reactor at pressure lower that atmospheric and anaerobic condition is gas heated (without combustion) at 240° to 900° C, the reaction to break the hydrocarbon bonds occurs immediately and the feedstock is homogenized h-feedstock (carbon contained).

The heating agent in this point is the gasification fluid from the next gasification stage.

**3. Granulation of pyrolysis coke alone or whit some additives like heavy tars from gasification and/or whit small fraction of feeding materials, whit low temperature melting point (like small plastic particles etc.):** Virtually any method and system can be used for granulation. These methods and systems are well known to those skilled in the art and therefore do not need to be explained in more detail within the scope of the present invention.

**4. Gasification of pyrolysis vapors:** Gasification of pyrolysis vapors: with air or air/steam or oxygen/steam or oxygen/CO2 in the burner on gasifier where the final break and separation of hydrocarbon bonds in pyrolysis vapors occurs ant the pyrolysis vapors are converted in producer gas (syngas).

**5. Gasification of the homogenized and granulated carbon contained feedstock in a stationary bed gasifier:** From the granulation system, the granulated pyrolysis solid product (coke or charcoal) is fed to the stationary bed gasifier where the final break and separation of hydrocarbon bonds occurs at a temperature reaching 800°C to 2200°C. By a strict control of temperature and airflow fed in, the granulated feedstock is transformed into producer gas (Syngas) with the desired parameters for the further application. At this stage the gasification process is completed. The gasifier is auto heated, a lighter / gas burner is needed just to start the system for about 20 minutes.

At this point, an innovative technology based on a granulated solid phase stationary bed is used.

**6. Cooling of the hot gasification gas by direct recuperation of the heat and its use in the step 2.:** From the gasifier, the producer gas (Syngas) is collected in a Recuperator and directed to the Air cooler.

**7. Gas filtration to remove impurities such as particles, tars, HCl, chlorides, and sulfur species by clean-up system:** From the air-cooling, the producer gas (syngas) is directed to gas filtration system to remove impurities such as particles, tars, **HCl,** chlorides, and sulfur species by clean-up system that include Disintegrator, Tar remover, Electrostatic precipitator, Scrubber. The water of scrubber can circulate in close circuit between scrubber and Water tower for cooling purpose. Other cooling methods are also applicable.

### 8. Directing the producer gas (Syngas) to a selected application.

### IV. DESCRIPTION OF THE DRAWINGS

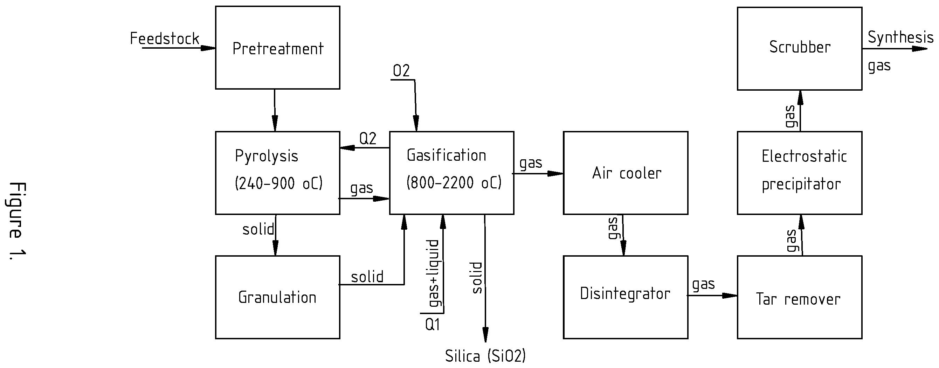

Figure 1- Block diagram of the installation

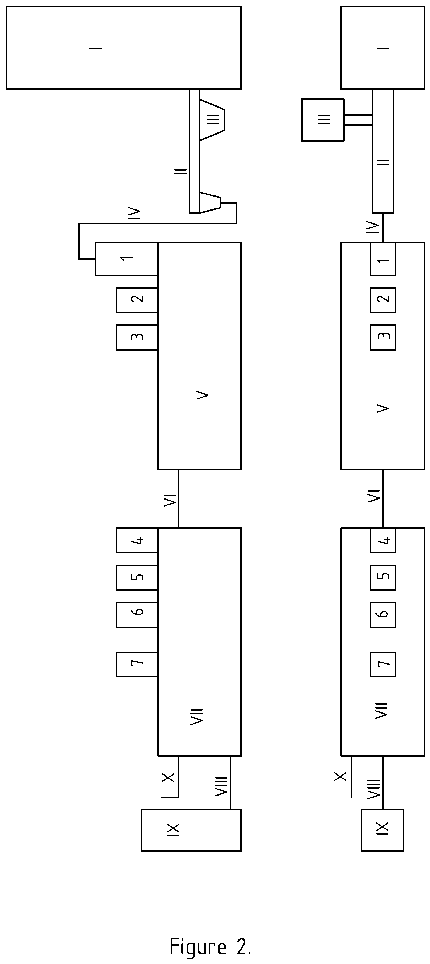

Figure 2 - Flow diagram of the installation implementing the method according to the invention

### V. EXAMPLE OF EMBODIMENT

The method can be applied to the installation for converting carbon contained feedstocks into producer gas (synthesis gas, syngas). As feedstock can be used any carbon contained feedstock like Refuse Derived Fuel (RDF), medical waste, agricultural waste, tires, automobile shredder residue (ASR or car-fluff),, residues and waste materials, biomass such as straw, wood or grass, but also from the biogenic solid or liquid waste resulting from the food industry, sewage sludge from waste water treatment, spent high-salt solutions from wood pulping, known as black liquor, and products from animal carcass processing, such as animal meal.

The converted producer gas (syngas) can be used after further purification stages for the production of electricity, heat, fuels, hydrogen, methanol, ethanol, dimethyl ether (DME), Fischer-Tropsch Product (FT products); ethylene; propylene; acetic acid; ammonia; urea; synthetic natural gas (SNG); or other chemicals as well as all other possible uses of synthetic gas (syngas).

In this example the method is applied for the installation for the transformation of Refuse Derived Fuel (RDF) to producer gas (syngas) for use in electrical generator. This is a reliable method for transforming RDF into fuel - a clean and available alternative of natural gas (methane) fuel in an internal combustion engine. For example RDF with the following characteristics can be used as a fuel.

### Approximate RDF composition

| | | |
|---|---|---|
| **Biological waste** | **25** | **mass %** |
| **Plastic content** | **17** | **mass %** |
| **Paper** | **42** | **mass %** |
| **Textiles** | **7** | **mass %** |
| **Glass** | **9** | **mass %** |
| **Metals** | **<1** | **mass %** |

### Organic content

| | | |
|---|---|---|
| **C** | **41** | **mass %** |
| **H** | **6.7** | **mass %** |
| **O** | **38.9** | **mass %** |
| **N** | **0.4** | **mass %** |
| **S** | **0.1** | **mass %** |

### Average non-organic content

| | | |
|---|---|---|
| **Solids** | **11.7** | **mass %** |
| **Moisture** | **30.87** | **mass %** |

### Approximate calorific value of the feed: ^{~}14 MJ/kg

Carbon contained RDF is fed by conveyor belt into a Bunker (I), which, by gravity, will release the necessary quantity of RDF to the dehydrator conveyor (drying conveyor) (II). The humidity contained into the RDF is condensed and collected in collector vessel (III**)** with a possible capacity of 1 m3. The water collected is the humidity at the surface of feedstock. If needed, this water will be cleaned by active oxygen prior to its release to the sewage. The screw conveyor (IV) delivers the RDF into the Pre-gasification/Homogenization /Gasification/Cooling system (V). The feedstock enters the pyrolyzer (1) for pre-gasification (pyrolysis and homogenization). Inside the pyrolyzer under atmospheric and anaerobic conditions gas heated (without combustion) at 400° to 500° C. A reaction to break the hydrocarbon bonds occurs immediately and the carbon contained RDF is homogenized. The obtained solid pyrolysis product (solid pyrolysis coke) is fed for granulation in the granulation system (2). Granulation of pyrolysis coke alone or whit some additives like heavy tars from gasification and/or whit small fraction of feeding materials, whit low temperature melting point (like small plastic particles), takes place. Virtually any method and system can be used for granulation. These methods and systems are well known to those skilled in the art and therefore do not need to be explained in more detail within the scope of the present invention. The vapor-gas mixture from the pyrolysis process is fed to the gasifier burner, where it is gasified whit air or air/steam or oxygen/steam or oxygen/CO2 and the final break and separation of hydrocarbon bonds in pyrolysis vapors occurs and the pyrolysis vapors are converted in producer gas (syngas). All gases from pyrolysis vapor gasification or pyrolysis vapors itself pass through heated to high temperatures carbon granules, located on stationary bed of gasifier; From the granulation system (2), the granulated pyrolysis solid product (coke or charcoal)is fed to the stationary bed gasifier (3) where the final break and separation of hydrocarbon bonds occurs at a temperature reaching 800°C to 2200°C. By a strict control of temperature and airflow fed in, the granulated feedstock is transformed into producer gas (Syngas) with the desired parameters for the further application. All gases from pyrolysis vapor gasification or pyrolysis vapors itself pass through heated to high temperatures carbon granules, located on stationary bed of gasifier. The gasification fluid from the gasification stage can be used alone or in combination with other gases, as a heater - heating agent in the preceding pre-gasification stage - pyrolysis. At this stage the gasification process is completed. The gasifier is auto heated, a lighter / gas burner is needed just to start the system for about 20 minutes. The conditions under which the gasification of the present example takes place are indicated in the following table.

### Gasification process conditions

| | | |
|---|---|---|
| **RDF feed** | **1.20** | **t/h** |
| **Process temperature** | **1000-1500** | **°C** |
| **Syngas flow rate** | **2070** | **Nm3/h** |
| **Air flow rate** | **2463.3** | **Nm3/h** |
| **Total flow rate** | **4533.3** | **Nm3/h** |

After granulation the pyrolysis products: granulated pyrolysis solid product (coke or charcoal) and pyrolysis vapor-gas mixture are fed separately to the stationary bed gasifier.

In other variant of embodiment, after granulation the pyrolysis products: granulated pyrolysis solid product (coke or charcoal) is fed alone into the gasification and the vapor-gas mixture is used elsewhere.

In other variant of embodiment, the pyrolysis vapor-gas mixture is fed alone to gasification and the pyrolysis solid product (coke or charcoal) is used elsewhere.

In other variant of embodiment, a part from the pyrolysis products: granulated pyrolysis solid product (coke or charcoal) and vapor-gas mixture is separated and used elsewhere and the remaining part is fed separately to the stationary bed gasifier.

For use in an internal combustion engine (e.g. electric generator), the air flow rate must be 1.19 of the synthesis gas flow rate (stoichiometrically). By this way, a syngas with a high nitrogen content is produced, also called producer gas. Syngas (producer gas) characteristics corresponding to this application are presented below

### Syngas (producer gas) composition

| | | |
|---|---|---|
| **CO2** | **9** | **vol %** |
| **CO** | **21** | **vol %** |
| **H2** | **16** | **vol %** |
| **CH4 (and other light hydrocarbure)** | **3** | **vol %** |
| **N2** | **50** | **vol %** |
| **O2** | **≤0.3** | **vol %** |
| **H2S** | **≤0.01** | **vol %** |

### Calorific value of the producer gas (syngas): 5.28 MJ/kg (1262.34 kcal/kg); producer gas (Syngas density): 1.09 kg/m3.

From the gasifier, the producer gas (Syngas) is collected in a Recuperator and directed to the Air cooler. The cooling of the hot gas from gasification is done by direct heat recovery, the latter being used in the pyrolysis process. From the air-cooler, the producer gas (syngas) is directed via (VI) to gas filtration system (VII) to remove impurities such as particles, tars, HCl, chlorides, and sulfur species by clean-up system that include Disintegrator (4), Tar remover (5), Electrostatic precipitator (6), Scrubber (7). The water of scrubber (7) may circulate in close circuit (VIII) between scrubber (7) and Water tower (IX) for cooling purpose. Water tower (IX) may be a 20 m3 volume vessel (2x2x5) and can be placed anywhere at 2m distance of the Gas filtration system (VII). Other cooling methods are also applicable. Than the producer gas (Syngas) is directed via Gas transportation tube system (X) to gas generator to produce electricity.

## Claims

1. Method for three-stage gasification from carbon contained feedstock, including gasification processes preceded by reduction of water content, pre-gasification - pyrolysis of the pre-dried and optionally ground feedstock, at a pressure that is lower or higher than atmospheric; after the gasification process, the gas is cooled; the process of pre-gasification - pyrolysis takes place at temperatures between 240 and 900 °C, at a pressure that is lower or higher than atmospheric; gasification processes take place at temperatures between 800 and 2200 °C, at pressures that are lower or higher than atmospheric; the required amount of oxygen for the gasification process is introduced by adding air or mixture pure oxygen and water vapor and/or other inert component in gas form, like CO2 etc.; the gasification fluid from the gasification stage can be used alone or in combination with other gases, as a heater - heating agent in the preceding pre-gasification stage - pyrolysis; the waste heat from the gasification processes can be used to generate low or high-pressure and/or preheated steam and/or for preheating the air needed for gasification, and/or for heat recuperation for pyrolysis agent, in several steps of agent preheating; the products from pre-gasification - pyrolysis: a vapor-gas mixture and a solid phase - charcoal or coke can be used alone or in combination as a fuel in the gasification stage, **characterized by** granulation of pyrolysis solid product - coke or charcoal, alone or whit some additives like heavy tars from gasification and/or with small fraction of feeding materials, with low temperature melting point like small plastic particles etc.; direct continuous or periodic gasification of pyrolysis vapors with air or air/steam or oxygen/steam or oxygen/CO2 in **the burner on gasifier**; direct continuous or periodic gasification of carbon granules with air or air/steam or oxygen/steam or oxygen/CO2 in the **stationary bed** in gasifier; all gases from pyrolysis vapor gasification or pyrolysis vapors itself pass through heated to high temperatures carbon granules, located on stationary bed of gasifier;

2. The method according to claim 1, **characterized in that** after granulation the pyrolysis products:
granulated pyrolysis solid product - coke or charcoal and pyrolysis vapor-gas mixture are fed separately to the stationary bed gasifier.

3. The method according to claim 1, **characterized in that** after granulation the pyrolysis products:
granulated pyrolysis solid product - coke or charcoal, is fed alone into the gasification and the vapor-gas mixture is used in other application.

4. The method according to claim 1, **characterized in that** the pyrolysis vapor-gas mixture is fed alone to gasification and the pyrolysis solid product - coke or charcoal, is used in other application.

5. The method according to claim 1, **characterized in that** a part from the pyrolysis products:
granulated pyrolysis solid product - coke or charcoal and vapor-gas mixture is separated and used elsewhere and the remaining part is fed separately to the stationary bed gasifier.

6. The method according to claim 1, **characterized in that** as feedstock can be used carbon contained feedstock like Refuse Derived Fuel - RDF, medical waste, agricultural waste, tires, automobile shredder residue - ASR or car-fluff, residues and waste materials, biomass such as straw, wood or grass, but also from the biogenic solid or liquid waste resulting from the food industry, sewage sludge from waste water treatment, spent high-salt solutions from wood pulping, known as black liquor, and products from animal carcass processing, such as animal meal.

7. The installation implementing the method includes a system for dehydration - drying of carbon-containing feedstock and a system for pyrolysis of dried and optionally ground carbon-containing feedstock, **characterized in that** the bunker (I) is connected to the dehydrator conveyor (drying conveyor) (II) which is connected to a collector vessel (III) and to the screw conveyor (IV) connected to the Pre-gasification/Homogenization /Gasification/Cooling System (V) which includes the serially connected: pyrolyzer (1); granulation system (2); stationary bed gasifier (3); recuperator; the air cooler connected to a gas transport pipe (VI) connected to the Gas Filtration System (VII), which includes: a disintegrator (4); tar remover (5); electrostatic precipitator (6); Scrubber (7), which is connected to the Gas transportation tube system (X) and through a circulation system (VIII) with a water tower (IX).
**Patent Citations**
*DE 10 2005 006 305 A1 Verfahren zur Erzeugung von Brenn- und Synthesegasen mit Hochdruckdampferzeugung*
*US 9874 142 B2 INTEGRATED PYROLYSIS AND ENTRAINED FLOW GASIFICATION SYSTEMS AND METHODS FOR LOW RANK FUELS*
**Non-Patent Citations**
*P. Basu "Biomass Gasifcation and Pyrolysis. Practical Design and Theory", Elsevier, 2010* and *C. Higmann, "Gasification", Elsevier, 2003.*
